# EUROPEAN PATENT SPECIFICATION

(11) **EP 2 661 900 B1**
(45) Date of publication and mention of the grant of the patent: **18.03.2020**
(21) Application number: 11801947.0
(22) Date of filing: 13.12.2011
(51) Int. Cl.: H04N 21/436, H04N 21/41, H04N 21/475

(54) **MULTI-SCREEN INTERACTIONS**
INTERAKTIONEN MEHRERER SCHIRME
INTERACTIONS MULTI-ÉCRANS

(30) Priority: 05.01.2011 US 201161460598 P
(43) Date of publication of application: 13.11.2013
(73) Proprietor: Thomson Licensing, 92130 Issy-les-Moulineaux (FR)
(72) Inventor: SRIDHAR, Avinash, Cranbury New Jersey 08512 (US); CAMPANA, David Anthony, Kirkland Washington 98033 (US); ANDERSON, David Brian, Hamilton New Jersey 08619 (US)
(74) Representative: Vidon Brevets & Stratégie
(86) International application number: PCT/US2011/064534
(87) International publication number: WO 2012/094105

(56) References cited:
- US-A1- 2009 144 435
- US-A1- 2010 268 810

## Description

### BACKGROUND

Users of supplemental viewing devices or as they are sometimes referred to as - second screen devices - cannot communicate directly with the primary or first screen device. This limits the second screen user to only disseminating their second screen information by physically showing another person their second screen display.

US2010/268810A1 patent application discloses a remote control able to control multiple televisions based on its range to a television. The remote control sends control signals to the televisions via a communication line such as a local area network (LAN). But the remote control does not send any information for display to the televisions.

US2009/144435A1 patent application discloses a method and an apparatus for sharing data in near field communication network, allowing a first electronic device to exchange desktop configuration information with a second electronic device and share desktop data with the second device. The method proposes that the first electronic device with a small size screen uses a larger screen of a second device for displaying its desktop. The patent application discloses a solution in which both the second device and the first device display a same content.

In larger audience settings and/or in remote viewing settings, interaction between first and second screen devices becomes increasingly difficult if not impossible to accomplish.

### SUMMARY

In the context of second screen solutions, interactions between a second screen and a first screen are given. These interactions permit single and/or multiple users to utilize the first screen to display information beyond the currently watched program. This allows the second screen to get the attention of its user, etc. It also allows a second screen user to share information to other people watching the first screen.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

### BRIEF DESCRIPTION OF THE DRAWINGS

FIG. 1 is a basic diagram of architecture showing a first screen, a second screen, intermediate devices and communications means.
FIG. 2 is an overlay on first screen notifying of a user of content on a second screen.
FIG. 3 is a second screen user interface for interacting with a first screen.
FIG. 4 is a first screen overlay providing information resulting from second screen interactions.
FIG. 5 is a flow diagram of a method of providing information to a viewing device.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

As used in this application, the term "component" is intended to refer to hardware, software, or a combination of hardware and software in execution. For example, a component can be, but is not limited to being, a process running on a processor, a processor, an object, an executable, *and*/*or* a microchip and the like. By way of illustration, both an application running on a processor and the processor can be a component. One or more components can reside within a process and a component can be localized on one system *and*/*or* distributed between two or more systems. Functions of the various components shown in the figures can be provided through the use of dedicated hardware as well as hardware capable of executing software in association with appropriate software.

A communication channel is established between at least one second screen device and a first screen device. The first screen can be, but is not limited to, a television, a monitor, and/or a projector and the like. In other words, the first screen can include a movie screen with a projector projecting media content onto the movie screen. Communications between the second screen and the first screen can then be made to the projector which then projects the information on the movie screen, etc.

The communication means can include, but is not limited to, wired (e.g., Ethernet, phone lines, etc.) and/or wireless (e.g., Bluetooth, etc.) means and the like. This includes direct (e.g., peer-to-peer communications, directly wired to each other, etc.) and/or indirect communication means as well (e.g., via the Internet, WLAN, remote server, local server, etc.). This permits the second screen device to display information on the first screen. In one instance, the second screen device can directly write to at least a portion of the first screen. In other instances, the second screen communicates with the first screen and the first screen places the information itself. For example, the information displayed can be an overlay to existing media content being watched on the first screen, and/or it can be in place of the currently watched media content. Similarly, it can be placed in a particular location such that the media content can still be viewed on other areas of the first screen. Likewise, the first screen can automatically reduce the size of the media content being viewed and place the second screen information in proximity of the media content (above, beside, below it, etc.).

The displaying of the information by the second screen device can be at the prompting of a user of the second screen device and/or solely by the prompting of the second screen device itself (automatically and/or manually). If multiple people and/or multiple second screen devices are viewing the same first screen, the second screen devices can share information by displaying it on the first screen. This allows people watching the first screen who do not have a second screen device to also view the information. Most second screen users have different preferences selected on their second screen devices and can be viewing different information related to the same media content being viewed on the first screen. If something of interest comes up on their second screen device, they can easily share it with other watchers of the media content by sending it to the first screen.

In some instances, a user of a second screen device can opt to have the second screen device automatically communicate with the first screen device. For example, the user might be an avid movie buff and likes to have a short biography overlaid on the first screen when a new actor enters into the movie. Thus, as each new character is introduced in the movie, information regarding that character from the second screen device can be automatically displayed on the first screen. If others are watching the movie, the user can turn this feature off to avoid interfering with other viewers.

In another instance, the second screen device user can opt to have important information displayed automatically on the first screen as well. For example, while watching a program which can last several hours, a mined media content guide on the second screen device might discover a show that the user is highly interested in and notify (e.g., send a user notification, etc.) the user on the first screen to review the information on the second screen device. This is handy because most users are unlikely to be constantly viewing their second screen device during multi-hour long programs.

Interactive functions can also be provided between multiple second screen device users watching a given media content. This can include, for example, which second screen user is first to notice a phrase and/or object that keeps reoccurring in the media content, etc. Second screen users can select a button, and the first second screen device user is shown on the first screen. This can also be used to break a tie when multiple second screen device users attempt to change a channel on the first screen device. For example, a game of tic tac toe might appear on each of the tied second screen devices and the winner gets to change the channel, etc.

In another example, second screen device users can vote on whether they like the media content as they watch it. This is especially helpful in large viewing environments such as auditoriums where second screen device users can be evaluating the media content and the like such as a product commercial, etc. It can also be used in classrooms where a teacher can ask students to guess a correct answer regarding media content on a first screen. This technology can also incorporate a second screen device user's social networking information such as Facebook friends and the like. Collaborative efforts can also be accomplished with this technology.

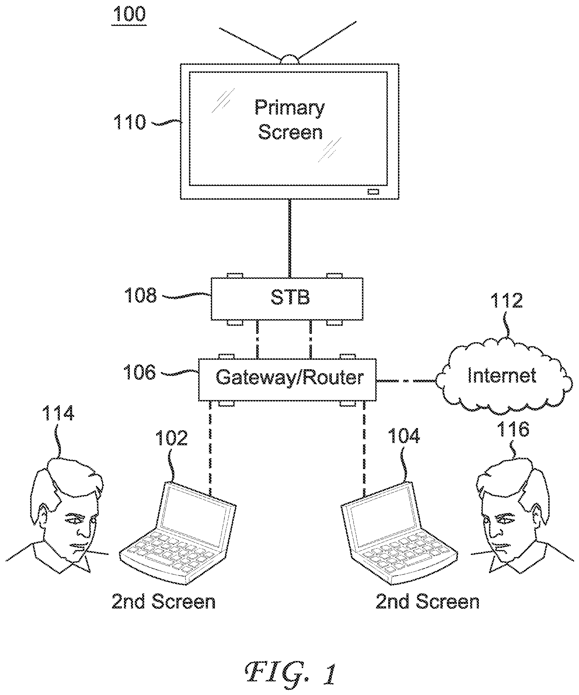

FIG.1 illustrates a basic architecture 100 of an environment that supports multi-screen interactions. In this example, two second screens 102, 104 communicate with an intermediate device such as a gateway/router 106 and the like. The gateway/router 106 is linked to a wide area network (WAN) (e.g., the Internet) 112. In this instance, the gateway/router 106 is connected to another intermediate device such as a set top box 108 that is in communication with a primary screen 110. In another instance, the set top box 108 can be linked to a WAN and/or a cable service provider and the like. The WAN connections facilitate to provide secondary or supplemental information to users 114, 116 of the second screens 102, 104 respectively.

The supplemental information is typically associated with the media content being viewed on the primary screen 110. It can be automatically downloaded to the second screens 102, 104 and/or downloaded to the second screens 102, 104 when prompted by a user 114, 116. In other instances, the second screens 102, 104 can be connected directly to the set top box 108 and/or directly to the first or primary screen 110. The second screens 102, 104 can also receive supplemental information from a wireless and/or wired local area network as well. A user might have locally stored information on a shared storage device and the like. A storage device (e.g., hard drive, etc.) within a second screen device can also be accessed for supplemental information.

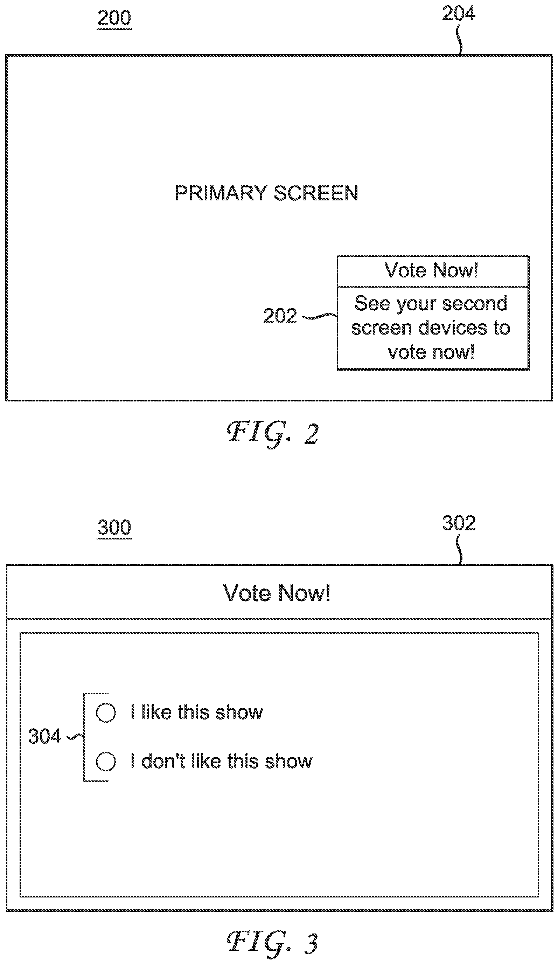

In FIG.2, an example 200 of an overlay 202 is shown on a primary screen 204. In this example 200, the overlay 202 is directing the viewers of the primary screen 204 to look at their second screen devices (not shown). The second screen device users are informed that a vote is taking place relating to the media content being viewed on the primary screen. FIG. 3 illustrates and example 300 of a second screen 302 with a user interface for interacting with the first screen 200. In this example, a second screen device user can select their pick for whether they like the media content or they don't 304. Users can accomplish the selection using any type of selection device such as a mouse, keyboard, pointing instrument, and/or their finger and the like.

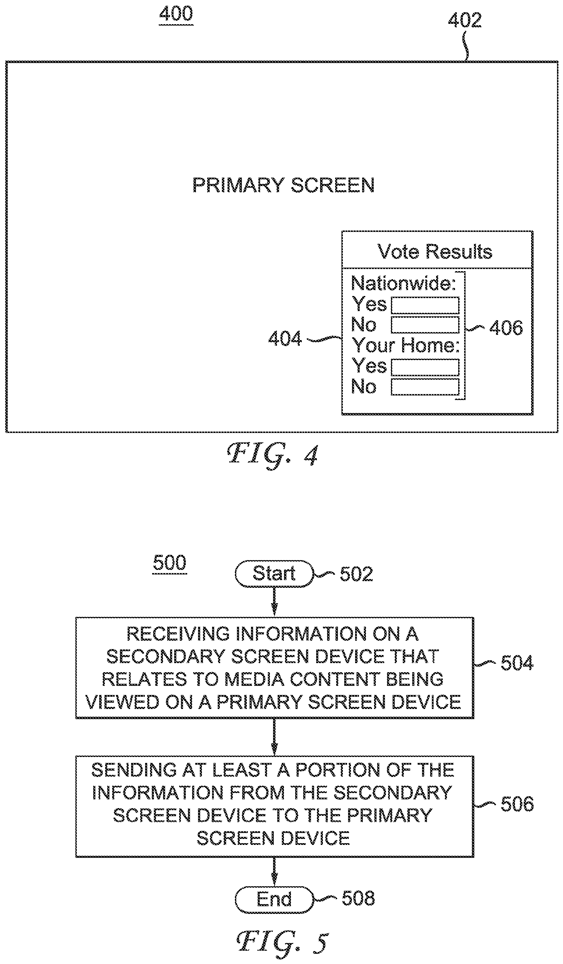

FIG. 4 is an example 400 of an overlay 404 on a primary screen device 402 that provides information resulting from second screen interactions. In this example 400, the primary screen device 402 processes the communicated information and determines results 406 from that information. In other instances, the primary screen device can display the raw information received from a second screen device and/or format the information without changing/altering it. Since the primary screen device 402 can know the location of a second screen device it is communicating with, it can use this location information to further add value to the information such as, for example, tallying how many votes came from nationwide versus in-home. This type of processing is extremely useful in teaching environments where students from different locations (e.g., schools) can vote and see what other students are thinking, etc.

In view of the exemplary systems shown and described above, methodologies that can be implemented in accordance with the embodiments will be better appreciated with reference to the flow charts of FIG. 5. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and*/*or* concurrently with other blocks from that shown and described herein. Moreover, not all illustrated blocks may be required to implement the methodologies in accordance with the embodiments.

FIG. 5 is a flow diagram of a method 500 of providing information to a viewing device. The method starts 502 by receiving information on a secondary screen device that relates to media content being viewed on a primary screen device 504. For example, this can include, but is not limited to, biographical information about an actor in media content displayed on the primary screen, statistical information for a sports player while a game is being viewed on the primary screen, and even indications that a user's favorite program is about to begin on a different station and the like. It can also be information generated from a user response entered on a secondary screen device that relates to the primary screen content and the like. The information can originate from a wide area network and/or local area network and the like. Remote servers often carry meta data relating to media content that can be accessed as the media content is displayed on the primary screen device. This allows the secondary device screen to be constantly updated with information as the media content progresses.

At least a portion of the information is then sent from the secondary screen device to the primary screen device 506, ending the flow 508. The secondary screen device can limit, filter, compile and/or otherwise alter the information sent to the primary screen device. It can also send raw information to the primary screen as well. Similarly an intermediate device can relay information (or at least a portion of the information) from the secondary screen device to the primary screen device. The intermediate device can also process the information before sending it to the primary screen device. One skilled in the art can appreciate that the secondary screen device can be programmed to automatically send at least a portion of the information to the primary screen device directly and/or indirectly (via an intermediate device and the like). Likewise, the secondary screen device can have a user interface that lets a user input preferences and commands that can be used to automatically and/or manually send information to the primary screen devices. The secondary screen device can also use a user's social network information to facilitate in sending, altering and/or filtering the information sent to the primary screen device.

To the extent that the term "includes" is used in either the detailed description or the claims, such term is intended to be inclusive in a manner similar to the term "comprising" as "comprising" is interpreted when employed as a transitional word in a claim.

## Claims

1. A system that provides information to a viewing device, comprising:
- a secondary screen device (102, 104) in communication with a primary screen device (110); and
- a user interface on the secondary screen device (102, 104) adapted to send information from the secondary screen device (102, 104) to the primary screen device (110),
**characterized in that** said system is configured to:
- receive supplemental information associated with a media content viewed on the primary screen device (110) ; and
- send, via said user interface, at least a portion of said supplemental information from the secondary screen device (102, 104) to the primary screen device (110) to be displayed on the primary screen device (110) together with the media content.

2. The system of claim 1, wherein the secondary screen device (102, 104) receives said supplemental information associated with a media content viewed on the primary screen device (110) from at least one of a wide area network and a local area network.

3. The system of claim 1, wherein the user interface is adapted to select at least one of when to send the at least a portion of said supplemental information from the secondary screen device (102, 104) to the primary screen device (110) and what at least a portion of said supplemental information to send from the secondary screen device (102, 104) to the primary screen device (110).

4. The system of claim 1, wherein the user interface is adapted to command the secondary screen device (102, 104) to automatically select at least one of when to send the at least a portion of said supplemental information from the secondary screen device (102, 104) to the primary screen device (110) and what at least a portion of said supplemental information to send from the secondary screen device (102, 104) to the primary screen device (110).

5. The system of claim 1, wherein the secondary screen device (102, 104) writes supplemental information directly to at least a portion of a screen of the secondary screen device (102, 104).

6. The system of claim 1, wherein the secondary screen device (102, 104) automatically sends a user notification to the primary screen device (110) when the secondary screen device (102, 104) receives supplemental information associated with media content displayed on the primary screen device (110).

7. The system of claim 1, wherein the secondary screen device (102, 104) utilizes at least one of a social network of a user and at least one preference of a user in determining what at least a portion of said supplemental information is sent to the primary screen device (110).

8. The system of claim 1, further comprising:
- an intermediate device that sends at least one of altered information to the primary screen device (110) from the secondary screen device (102, 104) and unaltered information to the primary screen device (110) from the secondary screen device (102, 104).

9. A method for providing information to a viewing device, comprising:
- receiving, on a secondary screen device (102, 104), supplemental information associated with media content being viewed on a primary screen device (110); and
- sending at least a portion of the supplemental information from the secondary screen device (102, 104) to the primary screen device (110) to be displayed on the primary screen device together with the media content.

10. The method of claim 9, further comprising:
automatically sending the at least a portion of said supplemental information from the secondary screen device (102, 104) to the primary screen device (110).

11. The method of claim 9, wherein the at least a portion of said supplemental information is sent from the secondary screen device (102, 104) to the primary screen device (110) when a user command is received by the secondary screen device (102, 104).

12. The method of claim 9, further comprising:
- relaying at least a portion of the at least a portion of said supplemental information sent by the secondary screen device (102, 104) to the primary screen device (110) via an intermediate device.

## Patentansprüche

1. System, das Informationen an ein Betrachtungsgerät liefert, umfassend:
- eine sekundäre Bildschirmvorrichtung (102, 104) in Kommunikation mit einer primären Bildschirmvorrichtung (110); und
- eine Benutzerschnittstelle auf der sekundären Bildschirmvorrichtung (102, 104), die angepasst ist, Informationen von der sekundären Bildschirmvorrichtung (102, 104) an die primäre Bildschirmvorrichtung (110) zu senden,
**dadurch gekennzeichnet, dass** das System so konfiguriert ist, dass:
- zusätzliche Informationen in Verbindung mit einem Medieninhalt erhalten werden, der auf dem primären Bildschirmgerät angezeigt wird (110); und
- über die Benutzerschnittstelle mindestens ein Teil der Zusatzinformationen von der sekundären Bildschirmvorrichtung (102, 104) an die primäre Bildschirmvorrichtung (110) gesendet wird, um auf der primären Bildschirmvorrichtung (110) zusammen mit dem Medieninhalt angezeigt zu werden.

2. System nach Anspruch 1, wobei die sekundäre Bildschirmvorrichtung (102, 104) die Zusatzinformationen, die mit einem auf der primären Bildschirmvorrichtung (110) betrachteten Medieninhalt verbunden sind, von mindestens einem von einem Weitverkehrsnetzwerk und einem lokalen Netzwerk empfängt.

3. System nach Anspruch 1, wobei die Benutzerschnittstelle so angepasst ist, dass sie mindestens einen Zeitpunkt auswählt, was sie den mindestens einen Teil der Zusatzinformationen von der sekundären Bildschirmvorrichtung (102, 104) an die primäre Bildschirmvorrichtung (110) sendet und wann sie den mindestens einen Teil der Zusatzinformationen von der sekundären Bildschirmvorrichtung (102, 104) an die primäre Bildschirmvorrichtung (110) sendet.

4. System nach Anspruch 1, wobei die Benutzerschnittstelle so angepasst ist, dass sie der sekundären Bildschirmvorrichtung (102, 104) befiehlt, automatisch mindestens eine der folgenden Optionen auszuwählen: wann soll mindestens ein Teil der Zusatzinformationen von der sekundären Bildschirmvorrichtung (102, 104) an die primäre Bildschirmvorrichtung (110) gesendet werden und was soll mindestens ein Teil der Zusatzinformationen von der sekundären Bildschirmvorrichtung (102, 104) an die primäre Bildschirmvorrichtung (110) gesendet werden.

5. System nach Anspruch 1, wobei die sekundäre Bildschirmvorrichtung (102, 104) Zusatzinformationen direkt in mindestens einen Teil eines Bildschirms der sekundären Bildschirmvorrichtung (102, 104) schreibt.

6. System nach Anspruch 1, wobei die sekundäre Bildschirmvorrichtung (102, 104) automatisch eine Benutzerbenachrichtigung an die primäre Bildschirmvorrichtung (110) sendet, wenn die sekundäre Bildschirmvorrichtung (102, 104) Zusatzinformationen erhält, welche einem Medieninhalt zugeordnet sind, der auf dem primären Bildschirmgerät (110) angezeigt wird.

7. System nach Anspruch 1, wobei die sekundäre Bildschirmvorrichtung (102, 104) mindestens eines eines sozialen Netzwerks eines Benutzers und mindestens eine Präferenz eines Benutzers verwendet, um zu bestimmen, dass mindestens ein Teil der Zusatzinformationen zu dem primären Bildschirmgerät (110) gesendet wird.

8. System nach Anspruch 1, ferner umfassend:
- eine Zwischenvorrichtung, die mindestens eine von geänderten Informationen von der sekundären Bildschirmvorrichtung (102, 104) an die primäre Bildschirmvorrichtung (110) und unveränderte Informationen von der sekundären Bildschirmvorrichtung (102, 104) an die primäre Bildschirmvorrichtung (110) sendet.

9. Verfahren zum Bereitstellen von Informationen für eine Betrachtungsvorrichtung, umfassend:
- das Empfangen von Zusatzinformationen, die mit Medieninhalten verbunden sind, die auf einer primären Bildschirmvorrichtung (110) betrachtet werden, auf einer sekundären Bildschirmvorrichtung (102, 104); und
- das Senden mindestens eines Teils der Zusatzinformationen von der sekundären Bildschirmvorrichtung (102, 104) an die primäre Bildschirmvorrichtung (110), um zusammen mit dem Medieninhalt auf der primären Bildschirmvorrichtung angezeigt zu werden.

10. Verfahren nach Anspruch 9, ferner umfassend:
das automatische Senden mindestens eines Teils der Zusatzinformationen von der sekundären Bildschirmvorrichtung (102, 104) an die primäre Bildschirmvorrichtung (110).

11. Verfahren nach Anspruch 9, wobei zumindest ein Teil der Zusatzinformationen von der sekundären Bildschirmvorrichtung (102, 104) an die primäre Bildschirmvorrichtung (110) gesendet wird, wenn ein Benutzerbefehl von der sekundären Bildschirmvorrichtung (102, 104) empfangen wird.

12. Verfahren nach Anspruch 9, ferner umfassend:
- Weiterleiten mindestens eines Teils des mindestens einen Teils der von der sekundären Bildschirmvorrichtung (102, 104) gesendeten Zusatzinformationen über eine Zwischenvorrichtung an die primäre Bildschirmvorrichtung (110) .

## Revendications

1. Système qui fournit des informations à un dispositif de visualisation, comprenant :
- un dispositif à écran secondaire (102, 104) en communication avec un dispositif à écran primaire (110) ; et
- une interface utilisateur sur le dispositif à écran secondaire (102, 104) adaptée pour envoyer des informations à partir du dispositif à écran secondaire (102, 104) au dispositif à écran primaire (110),
**caractérisé en ce que** ledit système est configuré pour :
- recevoir des informations supplémentaires associées à un contenu multimédia visualisé sur le dispositif à écran primaire (110) ; et
- envoyer, via ladite interface utilisateur, au moins une partie desdites informations supplémentaires à partir du dispositif à écran secondaire (102, 104) au dispositif à écran primaire (110) pour qu'elles soient affichées sur le dispositif à écran primaire (110) conjointement avec le contenu multimédia.

2. Système selon la revendication 1, dans lequel le dispositif à écran secondaire (102, 104) reçoit lesdites informations supplémentaires associées à un contenu multimédia visualisé sur le dispositif à écran primaire (110) à partir d'au moins un parmi un réseau étendu et un réseau local.

3. Système selon la revendication 1, dans lequel l'interface utilisateur est adaptée pour sélectionner au moins un parmi quand envoyer l'au moins une partie desdites informations supplémentaires à partir du dispositif à écran secondaire (102, 104) au dispositif à écran primaire (110) et quelle au moins une partie desdites informations supplémentaires envoyer à partir du dispositif à écran secondaire (102, 104) au dispositif à écran primaire (110).

4. Système selon la revendication 1, dans lequel l'interface utilisateur est adaptée pour donner une instruction au dispositif à écran secondaire (102, 104) pour sélectionner automatiquement au moins un parmi quand envoyer l'au moins une partie desdites informations supplémentaires à partir du dispositif à écran secondaire (102, 104) au dispositif à écran primaire (110) et quelle au moins une partie desdites informations supplémentaires envoyer à partir du dispositif à écran secondaire (102, 104) au dispositif à écran primaire (110).

5. Système selon la revendication 1, dans lequel le dispositif à écran secondaire (102, 104) écrit des informations supplémentaires directement sur au moins une partie d'un écran du dispositif à écran secondaire (102, 104).

6. Système selon la revendication 1, dans lequel le dispositif à écran secondaire (102, 104) envoie automatiquement une notification utilisateur au dispositif à écran primaire (110) lorsque le dispositif à écran secondaire (102, 104) reçoit des informations supplémentaires associées à un contenu multimédia affiché sur le dispositif à écran primaire (110).

7. Système selon la revendication 1, dans lequel le dispositif à écran secondaire (102, 104) utilise au moins un parmi un réseau social d'un utilisateur et au moins une préférence d'un utilisateur en déterminant quelle au moins une partie desdites informations supplémentaires est envoyée au dispositif à écran primaire (110).

8. Système selon la revendication 1, comprenant en outre :
- un dispositif intermédiaire qui envoie au moins une parmi des informations altérées au dispositif à écran primaire (110) à partir du dispositif à écran secondaire (102, 104) et des informations non altérées au dispositif à écran primaire (110) à partir du dispositif à écran secondaire (102, 104).

9. Procédé permettant de fournir des informations à un dispositif de visualisation, comprenant :
- la réception, sur un dispositif à écran secondaire (102, 104), d'informations supplémentaires associées à un contenu multimédia en cours de visualisation sur un dispositif à écran primaire (110) ; et
- l'envoi d'au moins une partie des informations supplémentaires à partir du dispositif à écran secondaire (102, 104) au dispositif à écran primaire (110) pour qu'elles soient affichées sur le dispositif à écran primaire conjointement avec le contenu multimédia.

10. Procédé selon la revendication 9, comprenant en outre :
l'envoi automatique de l'au moins une partie desdites informations supplémentaires à partir du dispositif à écran secondaire (102, 104) au dispositif à écran primaire (110).

11. Procédé selon la revendication 9, dans lequel l'au moins une partie desdites informations supplémentaires est envoyée à partir du dispositif à écran secondaire (102, 104) au dispositif à écran primaire (110) lorsqu'une instruction utilisateur est reçue par le dispositif à écran secondaire (102, 104).

12. Procédé selon la revendication 9, comprenant en outre :
- le relais d'au moins une partie de l'au moins une partie desdites informations supplémentaires envoyées par le dispositif à écran secondaire (102, 104) au dispositif à écran primaire (110) via un dispositif intermédiaire.
